# EUROPÄISCHE PATENTSCHRIFT

(11) **EP 2 029 338 B1**
(45) Veröffentlichungstag und Bekanntmachung des Hinweises auf die Patenterteilung: **11.08.2010**
(21) Anmeldenummer: 07728896.7
(22) Anmeldetag: 08.05.2007
(51) Int. Cl.: B29B 7/80, B29C 45/20

(54) **KOMPONENTENZUFUHR- DÜSE MIT DRUCKENTLASTUNG**
COMPONENT-FEED NOZZLE WITH DEPRESSURIZATION
EMBOUT D'ARRIVÉE DE COMPOSANT AVEC DÉTENTE DE PRESSION

(30) Priorität: 08.06.2006 DE 102006026609
(43) Veröffentlichungstag der Anmeldung: 04.03.2009
(73) Patentinhaber: KraussMaffei Technologies GmbH, 80997 München (DE)
(72) Erfinder: SÖCHTIG, Wolfgang, 82110 Germering (DE); BERCHTENBREITER, Ernst, 86438 Kissing (DE)
(74) Vertreter: Zollner, Richard
(86) Internationale Anmeldenummer: PCT/EP2007/054443
(87) Internationale Veröffentlichungsnummer: WO 2007/141106

(56) Entgegenhaltungen:
- DE-A1- 1 476 146
- DE-A1- 3 522 618
- US-A- 5 875 922

## Beschreibung

Die vorliegende Erfindung betrifft eine Komponentenzufuhr-Düse zur Verwendung bei einem Reaktions-Mischkopf einer Reaktions-Einspritz-Vorrichtung gemäß dem Oberbegriff des Anspruchs 1.

Eine solche Düse zur Einbringung einer Reaktionskomponente in die Mischkammer eines Mischkopfes umfasst üblicherweise ein Gehäuse mit einem Komponenteneinlass sowie einem Komponentenauslass. Mittels eines hin und her beweglichen Verschlussorgans meist in Form einer Düsennadel ist der Komponenteneinlass verschließbar oder aber freigebbar. Ist er freigegeben, so besteht eine Strömungsverbindung zwischen dem Komponenteneinlass und dem Komponentenauslass, so dass die der Komponentenzufuhr-Düse unter Druck zur Verfügung gestellte Komponente über die Düse in die Mischkammer injiziert werden kann.

Nachteilig bei herkömmlichen Komponentenzufuhr-Düsen ist eine signifikante Beaufschlagung des Verschlussorgans durch die unter Druck befindliche Komponente in eine zur Schließrichtung entgegengesetzte Richtung. Diese Reaktionskraft muss bei der Verstellung, insbesondere beim Verschließen der Komponentenzufuhr-Düse erst überwunden werden. Dies wiederum erfordert eine großzügige Dimensionierung des Verstellantriebs, was sich sowohl herstellungsmäßig wie auch betriebsmäßig kostentreibend auswirkt.

In der DE 39 13 681 C1 ist eine Vorrichtung zum Erzeugen eines Reaktionsgemisches aus fließfähigen Reaktionskomponenten beschrieben, bei der Projektionsflächen einer Düsennadel derart ausgestaltet sind, dass sich die auf die Düsennadel einwirkenden Kräfte näherungsweise ausgleichen. Bei einer Ausführungsform wird die Reaktionskomponente von hinten an die Düsennadel heran- und durch diese hindurchgeführt. Dadurch ist es nicht möglich, an diesem Ende einen Antrieb angreifen zu lassen. Bei einer anderen Ausführungsform wird die Reaktionskomponente durch entsprechend ausgebildete Kanäle im Gehäuse verschiedenen Wirkräumen zugeführt. Allerdings bedingt diese Ausführungsform Gehäuse mit dickeren Wandungen, um darin die Kanäle ausbilden zu können.

Die AT 352 382 beschreibt eine Mischvorrichtung für flüssige Kunststoff-Komponenten, mit einer in einem Gehäuse angeordnetem Düsennadel. Die Düsennadel wird durch Einstellen der Druckdifferenz eines Arbeitsdruckes auf der einen und eines Steuerdruckes auf der anderen Seite in gewünschter Weise bewegt.

Aus der DE 38 11 642 A1 ist ein Verfahren zur Erzeugung fließfähiger Kunststoffmischungen für das Reaktionsgießen bekannt. Entsprechend der darin beschriebenen Ausführungsform werden Düsennadeln mittels elektromotorischer Antriebe bewegt. Allerdings muss hier gegen die durch das Arbeitsmedium auf die Düsennadel ausgeübte Kraft gearbeitet werden.

Überdies wird noch auf DE 3522618A1 und DE 197 43 187 hingewiesen, in denen die Düsen von Mischköpfen durch Erhöhen eines Arbeitsdruckes über einen bestimmten Wert geöffnet werden können.

Die US-A-5 875 922 offenbart eine Komponentenzufuhr-Düse gemäß dem Oberbegriff des Anspruchs 1.

Aufgabe der vorliegenden Erfindung ist es, eine dauerhaft funktionsfähige Komponentenzufuhr-Düse der eingangs genannten Art anzugeben, die auch mit einem kleinen kompakten Stellmotor funktionssicher betrieben werden kann.

Diese Aufgabe wird durch die im Anspruch 1 genannten Merkmale gelöst.

Dem gemäß sind bei einer gattungsgemäßen Komponentenzufuhr-Düse zumindest eine Fläche erster Art und eine Fläche zweiter Art an einem Verschluss- und Drosselorgan vorgesehen, an denen im wesentlichen der gleiche Komponentendruck anliegt, wobei durch die Fläche erster Art unter Anlage des Komponentendruckes eine Kraft in Öffnungsrichtung und durch die Fläche zweiter Art unter Anlage des Komponentendruckes eine Kraft in Schließrichtung, also in entgegengesetzter Richtung erzeugt ist. Die Dimension der beiden Flächen erster und zweiter Art sind dabei in ihrer Größe so gewählt, dass sich die entgegengesetzten Kräfte im Wesentlichen aufheben. Das Verschluss- und Drosselorgan ist dabei sowohl zum vollständigen Verschließen der Komponentenzufuhr-Düse wie auch zum Öffnen bei einem vorzugsweise unterschiedlich einstellbaren Drosselgrad ausgebildet. In einer Ausführungsform kann das Verschluss- und Drosselorgan in nur zwei Positionen bewegbar sein. Vorzugsweise ist das Verschluss- und Drosselorgan mittels des Antriebs jedoch in einer Vielzahl von Positionen, insbesondere kontinuierlich verschiebbar.

Das Verschlussorgan umfasst einen Körper, der kolbenartig ausgebildet ist. Im kolbenartigen Körper ist ein Strömungskanal vorgesehen. Dieser Strömungskanal realisiert eine Strömungsverbindung zwischen dem Komponenteneinlass und einem Wirkraum. Der Wirkraum ist teilweise durch das Verschlussorgan begrenzt, wobei diese Begrenzung eine Fläche zweiter Art darstellt. Ferner ist gegenüberliegend diesem Wirkraum, und zwar einlassseitig, ein weiterer Wirkraum ausgebildet, in dessen Bereich die Fläche oder die Flächen erster Art angeordnet sind.

Das Verschluss- und Drosselorgan ist mit einem Linearantrieb, insbesondere mit einem elektrischen Linearantrieb verbunden.

Das Verschluss- und Drosselorgan kann ein- oder mehrteilig ausgebildet sein.

Aufgrund der oben erwähnten verschiedenen Ausführungsformen ist eine große Variabilität gegeben und verschiedene Komponentenzufuhr-Düsen können für unterschiedliche Einsatzgebiete konstruiert werden. Gemeinsam ist diesen Komponentenzufuhr-Düsen jedoch immer, dass auf das Verschluss- und Drosselorgan - wenn überhaupt - nur eine geringe resultierende Kraft aus dem Komponentendruck resultiert, so dass dieses Element nicht gegen eine signifikanten Reaktionskraft bewegt werden muss. Durch diese konstruktive Ausgestaltung muss der Verstellantrieb keine oder nur kleine Reaktionskräfte überwinden, da sich die durch die Anlage des Komponentendruckes resultierenden Kräfte in ihrer Summe im Wesentlichen aufheben. Im optimalen Fall muss der Verstellantrieb lediglich noch die Reibungskraft, die dem System innewohnt, überwinden, wodurch ein wesentlich kompakterer Stellmotor verwendet werden kann. Im Ergebnis kann man den Antrieb aufgrund der bisher gewonnenen Erfahrungen in seiner bisherigen Dimensionierung um bis zu 90 % reduzieren.

Im günstigsten Fall heben sich die durch den Komponentendruck auf die Flächen erster und zweiter Art erzeugten, entgegengesetzten Kräfte genau auf. Es kann jedoch sein, dass sich die Kräfte in bestimmten Positionen - beispielsweise in der Schließposition - nicht vollständig aufheben und eine kleine resultierende Kraft in Öffnung- oder Schließrichtung bleibt.

In jedem Fall können die Flächen erster und zweiter Art über das komplette Verschluss- und Drosselorgan verteilt sein und sich auch aus Teilflächen zusammensetzen.

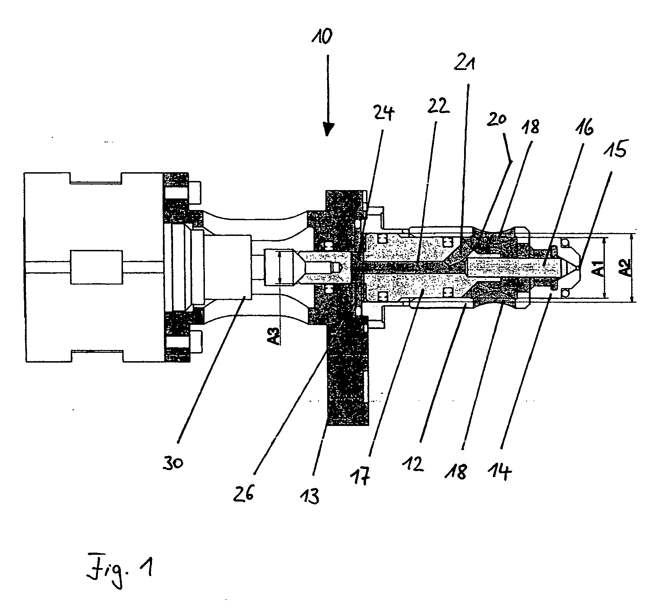

Die vorliegende Erfindung wird nachfolgend anhand eines Ausführungsbeispiels und mit Bezug auf die beigefügten Zeichnungen näher erläutert. Die Zeichnung zeigt in
- Fig. 1: eine erste Ausführungsform einer erfindungsgemäß ausgestalteten Komponentenzufuhr-Düse in geschlossener Position in Teilschnitt- darstellung.

Die in Fig. 1 gezeigte Komponentenzufuhr-Düse 10 umfasst ein Gehäuse mit einem ersten, vorderen Gehäuseteil 12 und einem zweiten, hinteren Gehäuseteil 13. Der vordere Gehäuseteil 12 ist zur Aufnahme eines Verschluss- und Drosselorgans mit einer Düsennadel 16 und einem Nadelkörper 17 ausgebildet. Im hinteren Gehäuseteil 13 ist im Wesentlichen ein Linearantrieb 30 vorgesehen. Das Verschluss- und Drosselorgan ragt etwas in den zweiten Gehäuseteil 13 und ist dort mit dem Linearantrieb 30 verbunden. Mittels des Linearantriebs 30 kann das Verschluss- und Drosselorgan, also der Nadelkörper 17 und die Düsennadel 16, vorgeschoben und zurückgezogen werden. Dabei ist die Komponentenzufuhr-Düse im vorgeschobenen Zustand der Düsennadel 16 geschlossen. Ist das Verschluss- und Drosselorgan von der Verschlussposition zurückgezogen und damit vom Sitz abgehoben, so ist sie in einem geöffneten Zustand, wobei sich durch den Öffnungsgrad die Drosselwirkung bestimmt.

Der kolbenförmig ausgebildete Nadelkörper 17 füllt den hinteren Bereich des ersten Gehäuseteils 12 im wesentlichen zylindrisch aus und lässt sich in einem gewissen Bereich, der durch verschiedene Anschläge definiert ist, hin und her verschieben.

Die Düsennadel 16 ist im vorderen Bereich des Nadelkörpers 17 in diesen eingepasst. Sie lässt sich mit dem Nadelkörper 17 zusammen linear verschieben.

Das erste, vordere Gehäuseteil 12 umfasst eine vordere Düsenspitze 14, in der eine Düsenöffnung 15 angeordnet ist.

Überdies sind im vorderen, ersten Gehäuseteil 12 seitlich Einlassöffnungen 18 über den Außenumfang angeordnet, über die eine Reaktionskomponente der Komponentenzufuhr-Düse zugeführt werden kann. Diese Reaktionskomponente gelangt über die Einlassöffnung 18 in einen Komponentenraum 20, der sich zwischen dem Nadelkörper 17 und der Düsenöffnung 15 erstreckt. Überdies ist im Nadelkörper 17 ein Einlasskanal 21 sowie ein zentraler Transferkanal 22 und ein Austrittskanal 24 vorgesehen, die insgesamt eine Strömungsverbindung zwischen dem Komponentenraum 20 und einem Wirkraum 26 definieren, wobei der Wirkraum 26 ringförmig zwischen dem Nadelkörper 17 und dem zweiten, hinteren Gehäuseteil 13 ausgebildet ist. Ringförmig ist der Wirkraum insbesondere deshalb, weil der Austrittskanal 24 lediglich in Form einer Bohrung durch den zentralen Teil des Körpers 17 ausgeführt ist.

Im dargestellten Zustand ist die Komponentenzufuhr-Düse verschlossen. Das heißt, die Düsennadel 16 ist mittels des Antriebs 30 vollständig nach vorne verschoben, so dass sie die Düsenöffnung 15 verschließt. Nunmehr besteht keine Strömungsverbindung zwischen dem Komponenteneinlass 18 und dem Komponentenauslass 15. Die Düse ist insgesamt geschlossen.

In einer anderen Schaltposition (nicht dargestellt) ist die Düsennadel zurückgezogen, so dass der Komponentenauslass 15 geöffnet ist und eine vom Grad des Zurückziehens abhängige Strömungsverbindung zwischen dem Komponenteneinlass 18 und dem Komponentenauslass 15 besteht. In diesem Zustand kann das der Komponentenzufuhr-Düse zugeführte Material entsprechend der Drosselöffnung durch den Komponenteneinlass 18, den Komponentenraum 20 sowie den Komponentenauslass 15 in einen Mischkopf überführt werden.

Dabei wirken in jedem Betriebszustand am Verschlussorgan, insbesondere dem Nadelkörper 17 Kräfte, die durch die jeweiligen Angriffsflächen definiert sind. Eine Angriffsfläche befindet sich am hinteren Bereich des Nadelkörpers 17, ist durch den ringförmigen Wirkraum realisiert und mit A2 bezeichnet. Die aufgrund des an dieser Fläche A2 anliegenden Komponentendruckes erzeugte Kraft zeigt in Schließrichtung. Eine weitere Fläche befindet sich im vorderen Bereich des Nadelkörpers 17 und ist mit A1 bezeichnet. Die aufgrund des an dieser Fläche A1 anliegenden Komponentendruckes erzeugte Kraft zeigt in Öffnungsrichtung. Überdies gibt es noch eine Fläche, die mit A3 bezeichnet ist und durch die obere Fläche des Austrittskanals 24 realisiert ist. Die aufgrund des an dieser Fläche A3 anliegenden Komponentendruckes erzeugte Kraft zeigt ebenfalls in Öffnungsrichtung.

Erfindungsgemäß sollte die Fläche A2 etwa genau so groß wie die Summe aus den Flächen A1 und A3 gewählt werden. In diesem Fall heben sich die durch den Komponentendruck auf die Flächen entstehenden Kräfte in ihrer Summe in etwa auf, so dass bei einer Verstellung des Verschluss- und Drosselorgans keine Reaktionskräfte, die durch die unter Druck stehende Komponente bewirkt sind, mehr überwunden werden müssen. Dabei ist darauf hinzuweisen, dass der Komponentendruck auf die Wirkflächen im wesentlichen gleich groß ist.

In Fig. 1 kann man dabei erkennen, dass sich die Kräfteverhältnisse im Schließzustand etwas ändern. Im Schließzustand liegt nämlich die vordere Spitze der Nadel 16 am Sitz der Düsenöffnung 15 an, wodurch diese Fläche nicht mehr mit dem Komponentendruck beaufschlagt ist. In dieser Schaltposition ist der Druck in Öffnungsrichtung damit um den daraus resultierenden Kraftbetrag geringer. Damit muss beim Öffnen eine gewisse, kleine Reaktionskraft überwunden werden. Allerdings befindet sich die Komponentenzufuhr-Düse aus diesem Grund in der Schließposition in einer stabilen Position, ohne dass der Antrieb kontinuierlich in Betrieb gehalten werden muss, wodurch die resultierende Kraft die Komponentenzufuhr-Düse verschlossen hält.

Der gesamte Mischkopf mit Ausnahme der Einspritzdüse kann wie in der DE 35 22 618 A1 in Fig. 3 oder wie in der DE 197 43 187, Fig. 3a) ausgebildet sein. Insofern weist der Mischkopf einen Steuer- oder Reinigungskolben auf, der in einer (nicht dargestellten) Mischkammer hin und her bewegt werden kann und eine oder mehrere Rezirkulationsnuten aufweist.

### Bezugszeichenliste

- 10: Düse
- 12: Erstes Gehäuseteil
- 13: Zweites Gehäuseteil
- 14: Düsenspitze
- 15: Düsenöffnung
- 16: Düsennadel
- 17: Nadelkörper
- 18: Einlassöffnung
- 20: Komponentenraum
- 21: Einlasskanal
- 22: Transferkanal
- 24: Austrittskanal
- 26: Gegendruckraum
- 30: Linearantrieb

## Patentansprüche

1. Komponentenzufuhr-Düse zur Verwendung bei einem Reaktions-Mischkopf einer Reaktions-Einspritz-Vorrichtung umfassend
- ein Gehäuse (12, 13) mit einem Komponenteneinlass (18) und einem Komponentenauslass (15),
- ein Verschluss- und Drosselorgan (16, 17), welches einen kolbenförmigen Körper (17) umfasst, im Gehäuse (12, 13) angeordnet und mittels eines Antriebs (30) zwischen zumindest zwei Positionen verschieblich bewegbar ist, wobei in einer ersten Betriebsposition der Komponentenauslass (15) vom Verschluss- und Drosselorgan (16, 17) verschlossen ist und in einer zweiten Betriebsposition der Komponentenauslass (15) freigegeben und eine Strömungsverbindung zwischen dem Komponenteneinlass (18) und dem Komponentenauslass (15) gebildet ist,
wobei
- das Verschluss- und Drosselorgan (16, 17) zumindest eine Fläche erster Art (A1, A3) und eine Fläche zweiter Art (A2) aufweist,
- an allen Flächen (A1, A2, A3) im wesentlichen der gleiche Komponentendruck anliegt,
- durch die Fläche erster Art (A1, A3) unter Anlage des Komponentendruckes eine Kraft in Öffnungsrichtung und durch die Fläche zweiter Art (A2) unter Anlage des Komponentendruckes eine Kraft in Schließrichtung erzeugt ist und
- die Flächen erster und zweiter Art (A1, A2, A3) in ihrer Größe derart gewählt sind, dass sich die entgegengerichteten Kräfte im wesentlichen aufheben,
**dadurch gekennzeichnet,**
**dass** das Verschluss- und Drosselorgan (16, 17) mit einem Linearantrieb (30) verbunden ist,
**dass** in dem kolbenförmigen Körper (17) ein Strömungskanal (21, 22, 24) mit einem Austrittskanal (24) ausgebildet ist, der eine Strömungsverbindung zwischen dem Komponenteneinlass (18) und einem Wirkraum (26) herstellt, und
**dass** durch die obere Fläche des Austrittskanals (24) eine Fläche realisiert ist, die aufgrund des Komponentendruckes eine Kraft in Öffnungsrichtung erzeugt.

2. Komponentenzufuhr-Düse nach Anspruch 1,
**dadurch gekennzeichnet,**
**dass** das Verschluss- und Drosselorgan (16, 17) mittels des Antriebs in einer Vielzahl von Positionen positionierbar ist.

3. Komponentenzufuhr-Düse nach einem der Ansprüche 1 bis 2,
**dadurch gekennzeichnet,**
**dass** das Verschluss- und Drosselorgan (16, 17) kontinuierlich verstellbar ist.

4. Komponentenzufuhr-Düse nach einem der vorhergehenden Ansprüche,
**dadurch gekennzeichnet,**
**dass** das Verschlussorgan (16, 17) eine Düsennadel (16) umfasst.

5. Komponentenzufuhr-Düse nach einem der vorhergehenden Ansprüche,
**dadurch gekennzeichnet,**
**dass** zumindest eine Fläche einer Art aus Teilflächen (A1, A3) zusammengesetzt ist.

6. Komponentenzufuhr-Düse nach einem der vorhergehenden Ansprüche,
**dadurch gekennzeichnet,**
**dass** das Gehäuse mit einem vorderen (12) und einem hinteren Gehäuseteil (13) ausgebildet ist und in dem vorderen Gehäuseteil das Verschluss- und Drosselorgan und in dem hinteren Gehäuseteil im wesentlichen der Linearantrieb (30) vorgesehen ist.

## Claims

1. Component-feed nozzle for use in a reaction mixing head of a reaction injection device comprising
- a housing (12, 13) with a component inlet (18) and a component outlet (15),
- a closing and throttle member (16, 17), which comprises a piston-shaped body (17), is arranged in the housing (12, 13) and is movable displaceably between at least two positions by means of a drive (30), wherein in a first operating position the component outlet (15) is closed by the closing and throttle member (16, 17) and in a second operating position the component outlet (15) is cleared and a flow connection is formed between the component inlet (18) and the component outlet (15),
wherein
- the closing and throttle member (16, 17) has at least one area of the first type (A1, A3) and an area of the second type (A2),
- substantially the same component pressure is applied at all areas (A1, A2, A3),
- through the area of the first type (A1, A3) with application of the component pressure, a force is produced in the opening direction and through the area of the second type (A2) with application of the component pressure a force is produced in the closing direction and
- the areas of the first and second type (A1, A2, A3) are selected in their size such that the oppositely directed forces substantially cancel each other out,
**characterized in that**
the closing and throttle member (16, 17) is connected with a linear drive (30),
a flow channel (21, 22, 24) with an outlet channel (24) is formed in the piston-shaped body (17), which produces a flow connection between the component inlet (18) and an action space (26), and
through the upper area of the outlet channel (24) an area is realized which produces a force in the opening direction owing to the component pressure.

2. Component-feed nozzle according to Claim 1, **characterized in that**
the closing and throttle member (16, 17) is able to be positioned in a variety of positions by means of the drive.

3. Component-feed nozzle according to one of Claims 1 to 2,
**characterized in that**
the closing and throttle member (16, 17) is continuously adjustable.

4. Component-feed nozzle according to one of the preceding claims,
**characterized in that**
the closure member (16, 17) comprises a nozzle needle (16).

5. Component-feed nozzle according to one of the preceding claims,
**characterized in that**
at least one area of a type is composed of partial areas (A1, A3).

6. Component-feed nozzle according to one of the preceding claims,
**characterized in that**
the housing is constructed with a front housing part (12) and a rear housing part (13) and the closing and throttle member is provided in the front housing part and substantially the linear drive (30) is provided in the rear housing part.

## Revendications

1. Embout d'arrivée de composant destiné à être utilisé dans une tête de mélange à réaction d'un dispositif d'injection à réaction comprenant :
- un boitier (12, 13) comprenant une admission de composant (18) et une sortie de composant (15),
- un organe de fermeture et d'étranglement (16, 17) qui comprend un corps en forme de piston (17) placé dans le boitier (12, 13) et mobile en étant poussé dans au moins deux positions par un entraînement (30), sachant que dans une première position de service, la sortie de composant (15) est fermée par l'organe de fermeture et d'étranglement (16, 17) et dans une deuxième position de service, la sortie de composant (15) est libérée et une liaison d'écoulement entre l'admission de composant (18) et la sortie de composant (15) est formée,
sachant que
- l'organe de fermeture et d'étranglement (16, 17) présente au moins une surface de premier type (A1, A3) et une surface de deuxième type (A2),
- la même pression de composant s'applique essentiellement sur toutes les surfaces (A1, A2, A3),
- une force est produite dans le sens d'ouverture par la surface de premier type (A1, A3) lorsque la pression de composant est exercée, et une force est produite dans le sens de fermeture par la surface de deuxième type (A2) lorsque la pression de composant est exercée et
- les tailles des surfaces de premier et deuxième type (A1, A2, A3) sont ainsi choisies que les forces dirigées les unes contre les autres s'annulent essentiellement, **caractérisé en ce que**
l'organe de fermeture et d'étranglement (16, 17) est relié à un entraînement linéaire (30),
que dans le corps en forme de piston (17), un canal d'écoulement (21, 22, 24) avec un canal de sortie (24) est formé qui produit une liaison d'écoulement entre l'admission de composant (18) et un espace fonctionnel (26), et
qu'une surface est réalisée par la surface supérieure du canal de sortie (24), laquelle produit une force dans le sens d'ouverture du fait de la pression de composant.

2. Embout d'arrivée de composant selon la revendication 1,
**caractérisé en ce que**
l'organe de fermeture et d'étranglement (16, 17) est positionnable dans une pluralité de positions au moyen de l'entraînement.

3. Embout d'arrivée de composant selon la revendication 1 ou 2,
**caractérisé en ce que**
l'organe de fermeture et d'étranglement (16, 17) est peut être déplacé de manière continue.

4. Embout d'arrivée de composant selon l'une des revendications précédentes,
**caractérisé en ce que**
l'organe de fermeture et d'étranglement (16, 17) comprend une aiguille d'embout (16).

5. Embout d'arrivée de composant selon l'une des revendications précédentes,
**caractérisé en ce qu'**
au moins une surface d'un type est composée de surfaces partielles (A1, A3).

6. Embout d'arrivée de composant selon l'une des revendications précédentes,
**caractérisé en ce que**
le boitier est formé d'une partie de boitier avant (12) et arrière (13) et que l'organe de fermeture et d'étranglement est prévu dans la partie de boitier avant et que l'entraînement linéaire (30) est prévu essentiellement dans la partie de boitier arrière.
